# EUROPÄISCHE PATENTSCHRIFT

(11) **EP 3 463 968 B1**
(45) Veröffentlichungstag und Bekanntmachung des Hinweises auf die Patenterteilung: **01.09.2021**
(21) Anmeldenummer: 17729055.8
(22) Anmeldetag: 31.05.2017
(51) Int. Cl.: B60L 15/00, H02M 3/158, H02M 7/219, B60L 50/51, B60L 53/10, B60L 53/122, B60L 53/14, B60L 53/24, B60L 53/22, H02J 1/08, H02J 7/02, H02M 7/537

(54) **FAHRZEUGBORDNETZ MIT WECHSELRICHTER, ENERGIESPEICHER, ELEKTRISCHER MASCHINE UND GLEICHSTROM-ÜBERTRAGUNGSANSCHLUSS**
VEHICLE SUPPLY SYSTEM COMPRISING AN INVERTER, ENERGY STORE, ELECTRIC MACHINE AND DC TRANSMISSION LINK
RÉSEAU DE BORD DE VÉHICULE COMPRENANT UN ONDULEUR, UN ACCUMULATEUR D'ÉNERGIE, UNE MACHINE ÉLECTRIQUE ET UNE BORNE DE TRANSMISSION DE COURANT CONTINU

(30) Priorität: 06.06.2016 DE 102016209898
(43) Veröffentlichungstag der Anmeldung: 10.04.2019
(73) Patentinhaber: Vitesco Technologies GmbH, 30165 Hannover (DE)
(72) Erfinder: BRÜLL, Martin, 93092 Barbing (DE); EHRMANN, Martin, 90482 Nürnberg (DE); FEUSTEL, Hans-Peter, 91154 Roth (DE); PFEILSCHIFTER, Franz, 93059 Regensburg (DE); TÖNS, Matthias, 93049 Regensburg (DE)
(86) Internationale Anmeldenummer: PCT/EP2017/063227
(87) Internationale Veröffentlichungsnummer: WO 2017/211657

(56) Entgegenhaltungen:
- EP-A2- 2 500 211
- WO-A1-2011/063006
- WO-A1-2015/193003
- DE-A1-102013 224 511
- JP-A- 2011 130 571
- JP-A- 2012 110 121
- US-A1- 2009 219 001
- US-A1- 2011 316 461
- US-A1- 2014 042 807
- US-A1- 2014 368 131
- US-A1- 2015 375 629

## Beschreibung

Kraftfahrzeuge mit einem elektrischen Antrieb, d.h. Elektrofahrzeuge und Hybridfahrzeuge, umfassen einen elektrischen Energiespeicher zur Versorgung des elektrischen Antriebs. Elektrofahrzeuge und Plug-In-Hybride sind mit einem Anschluss ausgestattet, mittels dem sich Energie von einem stationären elektrischen Versorgungsnetz (lokal oder öffentlich) zum Aufladen des Energiespeichers an diesen übertragen lässt. Gegebenenfalls sind die Fahrzeuge auch ausgestattet, elektrische Energie an das Versorgungsnetz zurückzuspeisen.

Zur Übertragung elektrischer Energie zwischen Versorgungsnetz und Fahrzeug sind leistungselektronische Komponenten erforderlich, insbesondere zur Steuerung der Energieübertragung.

Die Druckschrift US 20150375629 A1 beschreibt eine H-Brückenschaltung zum Betreiben eines Elektromotors sowie zum Laden, wobei die Induktivitäten des Motors die Querverbindung innerhalb der jeweiligen H-Brücken darstellen. Auch die Druckschrift US 2011/0316461 A1 beschreibt eine H-Brückenschaltung, bei der die Motorinduktivitäten die Querverbindung zwischen den Halbbrücken darstellen. Ferner beschreibt die WO 2011/063006 eine H-Brückenschaltung zur Speisung einer elektrischen Maschine sowie zum Laden, bei der Wicklungen der elektrischen Maschine zwischen Halbbrücken der H-Brücken-Elemente angeschlossen sind. Schließlich beschreibt die US 2014/0042807 A1 ein Fahrzeug, bei dem über die Motorwicklungen geladen wird und die Motorwicklungen Halbbrücken von H-Brückenelementen verbinden und somit eine Querverbindung darstellen.

In vergleichbarer Weise beschreibt die Druckschrift EP 2500211 A2 eine Schaltung, die Inverter- und Ladefunktionen kombiniert, die jedoch als B6C-Brücke ausgebildet ist, an welche die elektrische Maschine angeschlossen ist.

Die Druckschrift WO 2015/193003 A1 beschreibt einen Phasenumrichter für eine elektrische Maschine, basierend auf einer mehrphasigen H-Brückenschaltung mit einer Induktivität, die die Querverbindung in den jeweiligen H-Brücken-Elementen darstellt. In gleicher Weise beschreibt die Druckschrift JP 2012-110121 A einen Inverter basierend auf einer H-Brückenschaltung mit Induktivitäten als Querverbindung in den H-Brücken-Elementen. Auch die Druckschrift US 2009/0219001 A1 beschreibt einen Inverter basierend auf einem H-Brücken-Design. Die Druckschrift JP 2011-130571 beschreibt eine Spannungswandlerschaltung, die ebenso auf einer H-Brücken-Architektur basiert, bei der Induktivitäten die Querverbindung in der H-Brücke bilden. Den in diesen Absatz genannten Dokumenten ist gemein, dass diese ausschließlich die Funktion eines Stromrichters abbilden, das heißt allgemein nur den Energiefluss zwischen einer Last und einem Energiespeicher steuern. Weitere Leistungsflusspfade bestehen nicht.

Die Druckschrift DE 10 2013 224 511 A2 beschreibt ein elektrisches Antriebssystem mit mehreren Energiespeichermodulen, an die jeweils eine Phase einer elektrischen Maschine angeschlossen ist. Zudem umfasst die Schaltung mehrphasige Wandlerelemente mit jeweiligen Arbeitsinduktivitäten, wobei für jede Phase ein Schalter, eine Diode und eine Arbeitsinduktivität vorgesehen ist und somit ein von einer H-Brückenschaltung abweichendes Design gewählt wurde.

Es ist eine Aufgabe der Erfindung, eine Möglichkeit aufzuzeigen, mit der sich der Aufwand an derartigen Komponenten reduzieren lässt.

Diese Aufgabe wird gelöst durch den Gegenstand von Anspruch 1. Weitere Vorteile, Merkmale, Ausführungsformen und Eigenschaften ergeben sich mit den abhängigen Ansprüchen sowie aus dieser Beschreibung und den Figuren.

Es ist vorgesehen, dass zur Übertragung eines Gleichstroms an oder vom Fahrzeugbordnetz (eines eingangs beschriebenen Kraftfahrzeugs) Komponenten eines Wechselrichters verwendet werden. Hierzu wird ist zumindest eine Schiene eines Gleichstrom-Übertragungsanschluss (etwa ein Plug-In-Steckanschluss oder auch eine fahrzeugseitige Vorrichtung zur induktiven Energieübertragung) an zumindest ein Phasenstromanschluss des Wechselrichters angeschlossen. Die zumindest eine Schiene ist direkt mit zumindest einem Eingangsstromanschluss verbunden, oder ist über eine elektrische Maschine (des elektrischen Antriebs des Fahrzeugs), die mit Phasenstromanschlüssen verbunden ist, mit zumindest einem Eingangsstromanschluss verbunden. Die Verbindung zwischen Gleichstrom-Übertragungsanschluss und (mindestens einem) Phasenstromanschluss kann somit direkt oder indirekt über die elektrische Maschine vorgesehen sein.

Dadurch ist kein zusätzlicher Hoch- bzw. Tiefsetzsteller erforderlich, der die Spannung am Gleichstrom-Übertragungsanschluss an die Spannung am Energiespeicher anpasst. Die bereits vorhandene Leistungselektronik in Form des Wechselrichters, der insbesondere die Phasenströme für die elektrische Maschine bereitstellt, wird hierbei auch zur Steuerung der Leistung (insbesondere des Stroms und/oder der Spannung) verwendet, die über den Gleichstrom-Übertragungsanschluss übertragen wird.

Der Wechselrichter umfasst ferner H-Brückenschaltungen. Diese sind zwischen dem elektrischen Energiespeicher und den Phasenstromanschlüssen geschaltet. Dies ermöglicht einen Betrieb des Wechselrichters zur Wandlung zwischen der Gleichspannung des Energiespeichers und den Phasenspannungen der Phasenanschlüsse (d.h. der elektrischen Maschine). Dies ermöglicht ferner die Wandlung zwischen der Gleichspannung am Gleichstrom-Übertragungsanschluss und der Gleichspannung des Energiespeichers.

Es kann eine Steuerungseinheit vorgesehen sein, die den Wechselrichter ansteuert. Die Steuerungseinheit ist ansteuernd mit dem Wechselrichter verbunden. In einem Wechselrichtungsmodus der Steuerungseinheit wird der Wechselrichter angesteuert, aus der Gleichspannung des Energiespeichers Phasenspannungen zu erzeugen, die an den Phasenanschlüssen anliegen. In einem (optionalen) Rekuperationsmodus steuert die Steuerungseinheit den Wechselrichter an, aus den Phasenspannungen an den Phasenanschlüssen eine Ladespannung an dem Energiespeicher zu erzeugen. In einem Lademodus steuert die Steuerungseinheit den Wechselrichter an, aus der Spannung, die an dem Gleichstrom-Übertragungsanschluss anliegt, eine Ladespannung an dem Energiespeicher zu erzeugen. In einem (optionalen) Rückspeisemodus steuert die Steuerungseinheit den Wechselrichter an, aus der Spannung, die an dem Energiespeicher des Fahrzeugbordnetzes anliegt, eine Rückspeisespannung an dem Gleichstrom-Übertragungsanschluss zu erzeugen. Die Ladespannung am Energiespeicher kann von einem Batteriemanagementsystem des Energiespeichers oder von einer Rekuperationssteuerung als ein Sollwert vorgegeben werden. Anstatt einer Ladespannung kann auch ein Ladestrom oder eine Ladeleistung als Sollwert vorgegeben werden. Die Phasenspannungen können von einer (übergeordneten) Motorsteuerung der elektrischen Maschine vorgeben werden, entweder direkt als Spannungssollwert oder als Leistungs- oder Drehmomentanforderung. Anstatt von Phasenspannungen können auch Phasenströme wie erwähnt zur Steuerung dienen. Die Rückspeisespannung kann von einer Empfangseinrichtung des Fahrzeugbordnetzes als Sollwert erfasst werden. Die Empfangseinrichtung kann eingerichtet sein, Sollwerte von einer stationären Steuerung zu empfangen. Anstatt einer Rückspeisespannung kann auch ein Rückspeisestrom oder eine Rückspeiseleistung vorgegeben werden.

Das hier beschriebene Fahrzeugbordnetz ist wie erwähnt mit einem Wechselrichter, einem elektrischen Energiespeicher, einer elektrischen Maschine und einem Gleichstrom-Übertragungsanschluss ausgestattet. Der Wechselrichter umfasst Halbleiter-Leistungsschalter. Die Topologie des Wechselrichter und dessen Anbindung innerhalb des Bordnetzes ist im Weiteren dargestellt. Der elektrische Energiespeicher ist insbesondere ein Akkumulator, beispielsweise ein Lithium-basierter Akkumulator. Der elektrische Energiespeicher kann ein Traktionsakkumulator sein. Der Energiespeicher kann eine Nennspannung von 40 - 60 V aufweisen, insbesondere von 48 V, und kann insbesondere eine Nennspannung von mehr als 100 Volt, insbesondere von mindestens 200 oder 300 V, beispielsweise von 350 - 420 V, aufweisen. Der Energiespeicher kann somit ein Hochvolt-Akkumulator sein. Die elektrische Maschine ist insbesondere eine Drehstrommaschine. Die elektrische Maschine kann eine fremderregte oder permanenterregte elektrische Maschine sein. Der Gleichstrom-Übertragungsanschluss kann ein Plugin-Inlet umfassen, d.h. ein elektromechanisches Steckverbindungselement, das sich in der Außenhaut eines Fahrzeugs montieren lässt. Der Gleichstrom-Übertragungsanschluss ist eingerichtet, mit einem Ladestecker (bzw. allgemeiner: Verbindungsstecker) verbunden zu werden.

Der Wechselrichter weist einen positiven Eingangsstromanschluss und einen negativen Eingangsstromanschluss auf. Der Begriff Eingangsstromanschluss ergibt sich aus dem Wechselrichtermodus, in dem der Wechselrichter Leistung von dem Energiespeicher erhält. In diesem Modus erhält der Wechselrichter Leistung über den Eingangsstromanschluss, so dass in diesem Modus dieser Anschluss als Eingang des Wechselrichters dient. Im Lademodus dienen die gleichen Anschlüsse zur Abgabe von Leistung an den Energiespeicher, d.h. als Ausgang des Wechselrichters.

Die Eingangsstromanschlüsse sind mit dem Energiespeicher verbunden. Es kann ein Zwischenkreiskondensator parallel zu dem Energiespeicher bzw. parallel zu den Eingangsanschlüssen des Wechselrichters geschaltet sein.

Der Wechselrichter weist mindestens zwei Phasenstromanschlüsse auf, die mit der elektrischen Maschine verbunden sind. Insbesondere weist der Wechselrichter Phasenstromanschlüsse in einer Anzahl auf, die der Phasenzahl der elektrischen Maschine entspricht. Es kann jeder der Phasenstromanschlüsse mit einer eigenen Phase der elektrischen Maschine verbunden sein. Beispielsweise hat der Wechselrichter drei (oder sechs) Phasenstromanschlüsse, die jeweils an eine von drei (oder sechs) Phasen der elektrischen Maschine angeschlossen sind.

Der weist mindestens zwei H-Brücken auf. Die H-Brücken sind jeweils zwischen den Eingangsstromanschlüssen und den Phasenstromanschlüssen angeschlossen. Die H-Brücken sind in Reihe zwischen den Eingangsstromanschlüssen und den Phasenstromanschlüssen angeschlossen. Die H-Brücken sind parallel zueinander angeschlossen (zumindest hinsichtlich der Eingangsstromanschlüsse) . Die H-Brücken sind individuell mit einzelnen Phasen der elektrischen Maschine verbunden.

Jede H-Brücke umfasst zwei Arme. Ein erster dieser Arme verbindet die beiden Eingangsstromanschlüsse. Ein zweiter dieser Arme verbindet einen Eingangsstromanschluss (insbesondere den negativen) und einen Phasenstromanschluss. Jeder Arm umfasst zwei Schaltelemente, die über einen Verbindungspunkt miteinander verbunden sind. Die beiden Verbindungspunkte jeder H-Brücke (d.h. der Verbindungspunkt des einen Arms und der Verbindungspunkt des anderen Arms der gleichen H-Brücke) sind über eine Induktivität miteinander verbunden.

Die Schaltelemente, insbesondere Halbleiterschalter, jedes Arms sind an Verbindungspunkten miteinander verbunden. Die beiden Verbindungspunkte jeder H-Brücke sind mittels einer Induktivität miteinander verbunden. Die Induktivität ist insbesondere als diskretes Bauelement ausgestaltet, beispielsweise als Spule mit Kern.

Wie erwähnt können die H-Brücken des Wechselrichters jeweils zwei Arme aufweisen. Diese verbinden den positiven Eingangsstromanschluss mit dem negativen Eingangsstromanschluss mittels zweier serieller Halbleiterschalter verbinden. Die Halbleiterschalter sind vorzugsweise Transistoren, insbesondere Feldeffekt- oder Bipolar-Transistoren, beispielsweise MOSFETs oder IGBTs.

Jeder Phasenstromanschluss kann über einen Kondensator mit einem Eingangsstromanschluss (insbesondere mit dem den negativen Eingangsstromanschluss) verbunden sein. Mit anderen Worten kann bei jeder H-Brücke parallel zum zweiten Arm ein Kondensator angeschlossen sein.

Es ist vorgesehen, dass der Gleichstrom-Übertragungsanschluss eine positive Schiene aufweist, die mit mindestens einem der Phasenstromanschlüsse verbunden ist. Über diese Verbindung kann Leistung über den Wechselrichter in den elektrischen Energiespeicher eingespeist werden. Mit anderen Worten ist der Gleichstrom-Übertragungsanschluss mit mindestens einem der Phasenstromanschlüsse verbunden. Insbesondere umfasst die Verbindung zwischen Gleichstrom-Übertragungsanschluss und (mindestens einem) Phasenstromanschluss (d.h. die Verbindung zwischen Gleichstrom-Übertragungsanschluss und Wechselrichter) keinen Spannungs- oder Stromwandler. Die Verbindung zwischen Gleichstrom-Übertragungsanschluss und (mindestens einem) Phasenstromanschluss kann einen Filter und/oder Sicherheitselemente wie eine Sicherung und/oder ein Trennschalter aufweisen. Der Gleichstrom-Übertragungsanschluss kann einen Kontakt für ein negatives Potential und einen Kontakt für ein positives Potential aufweisen. Die positive Schiene kann dem positiven Kontakt entsprechen. Die negative Schiene kann dem negativen Kontakt entsprechen. Die Spannung am Gleichstrom-Übertragungsanschluss ist die Potentialdifferenz zwischen diesen Potentialen bzw. Kontakten.

Die positive Schiene des Gleichstrom-Übertragungsanschluss kann mit mindestens einem der Phasenstromanschlüsse verbunden sein, nämlich in direkter Weise. Als "direkt verbunden" wird daher eine Verbindung bezeichnet, die keine elektrische Maschine bzw. keine Wicklungen einer elektrischen Maschine umfasst. Als "direkt verbunden" wird daher eine Verbindung bezeichnet, die keine Schaltung zur Spannungs- oder Stromwandlung aufweist. Als "direkt verbunden" kann eine Verbindung bezeichnet werden, die einen Filter oder und/oder Sicherheitselemente wie eine Sicherung und/oder ein Trennschalter aufweist.
Die positive Schiene kann direkt mit einem der Phasenstromanschlüsse verbunden sein. Der Gleichstrom-Übertragungsanschluss kann wie erwähnt eine negative Schiene aufweisen. Diese kann mit einem weiteren der Phasenstromanschlüsse verbunden sein. Insbesondere können die Phasenstromanschlüsse über einen (mehrphasigen) Trennschalter mit der elektrischen Maschine verbunden sein. Die positive Schiene und die negative Schiene des Gleichstrom-Übertragungsanschlusses können daher mit verschiedenen Phasenanschlüssen bzw. verschiedenen Phasen der elektrischen Maschine verbunden sein. Um einen Stromfluss durch die elektrische Maschine während des Lademodus' zu vermeiden, kann ein Trennschalter vorgesehen sein, der die Phasenanschlüsse von der elektrischen Maschine bzw. deren Wicklungen trennt. Ferner kann ein Trennschalter zwischen Phasenwicklungen der elektrischen Maschine (in Verbindungen zwischen den Phasenwicklungen selbst) vorgesehen sein. Ein derartiger Trennschalter kann eingerichtet sein, eine Sternverschaltung (oder Dreiecksverschaltung) zumindest teilweise aufzuheben. Der Trennschalter kann Schalter vorgesehen sein, der zumindest eine der mit dem Gleichstrom-Übertragungsanschluss verbundenen Phasenwicklungen von anderen Phasenwicklungen abtrennt. Der Schalter kann ferner vorgesehen sein, alle Phasenwicklungen von einem Sternpunkt der elektrischen Maschine abzutrennen.
Die Steuerungseinheit kann eingerichtet sein, den Trennschalter anzusteuern. Die Steuerungseinheit kann insbesondere eingerichtet sein, den Trennschalter im Lade- oder im Rückspeisemodus im geöffneten Zustand zu halten. Die Steuerungseinheit kann ferner eingerichtet sein, den Trennschalter im Wechselrichter- oder im Rekuperationsmodus im geschlossenen Zustand zu halten. Die Steuerungseinheit kann ferner in einem Störungsfall eingerichtet sein, den Wechselrichter in allen Brücken aufzutrennen, etwa wenn eine Ladestörung oder eine Rückspeisestörung auftritt und das Laden oder das Rückspeisen unterbrochen werden soll.

Es kann eine Sperrklinke vorgesehen sein, um die elektrische Maschine zu arretieren (d.h. um eine Drehung zu verhindern) . Die Steuerungseinheit kann eingerichtet sein, die Sperrklinke anzusteuern. Die Steuerungseinheit kann insbesondere eingerichtet sein, die Sperrklinke im Lademodus und ggf. im Rückspeisemodus und zu arretieren und die Sperrklinke im Wechselrichtermodus und ggf. im Rekuperationsmodus nicht zu arretieren.

Weiterhin ist es möglich, dass die positive Schiene direkt oder über einen Schalter mit mehreren oder vorzugsweise allen Phasenstromanschlüssen verbunden ist. Mit anderen Worten ist der Gleichstrom-Übertragungsanschluss direkt oder über einen Schalter mit den Phasenstromanschlüssen verbunden, vorzugsweise mit allen. Dadurch können im Lademodus bzw. im Rückspeisemodus mehrere oder alle H-Brücken verwendet werden. Der Gleichstrom-Übertragungsanschluss weist eine negative Schiene auf, die mit dem negativen Eingangsstromanschluss des Wechselrichters verbunden ist. Falls ein Schalter verwendet wird, dann ist dieser vorzugsweise mehrphasig. Der Schalter weist für jede Verbindung zwischen einem Phasenanschluss und der positiven Schiene ein Schalterelement bzw. eine Phase auf (bei einem mehrphasigen Schalter). Die Steuerungseinheit ist eingerichtet, im Wechselrichtermodus oder ggf. im Rekuperationsmodus den Schalter in einem geöffneten Zustand zu halten. Die Steuerungseinheit ist ferner eingerichtet, im Lademodus oder ggf. im Rückspeisemodus den Schalter in einem geschlossenen Zustand zu halten.
Die negative Schiene des Gleichstrom-Übertragungsanschlusses kann mit dem negativen Eingangsstromanschluss des Wechselrichters verbunden sein.

Es kann vorgesehen sein, dass die elektrische Maschine einen Sternpunkt aufweist.

Wie erwähnt kann (bezogen auf den Gleichstrom-Übertragungsanschluss) vorzugsweise bei allen hier beschriebenen Varianten der Begriff "positive Schiene" durch "positiven Kontakt" ersetzt werden und der Begriff "negative Schiene" kann durch "negativen Kontakt" ersetzt werden.

Das Fahrzeugbordnetz kann ferner einen Wechselstrom-Übertragungsanschluss aufweisen. Dieser kann mit zumindest einem der Phasenstromanschlüsse verbunden sein. Der Wechselstrom-Übertragungsanschluss ist insbesondere mehrphasig, beispielsweise dreiphasig. Ferner kann der Wechselrichter dreiphasig sein, d.h. drei H-Brücken aufweisen. Die Phasen des Wechselstrom-Übertragungsanschlusses sind mit den Phasenanschlüssen des Wechselrichters verbunden.

Das Fahrzeugbordnetz ist insbesondere das Bordnetz eines Plug-in-Hybridkraftfahrzeugs oder eines Elektrokraftfahrzeugs.

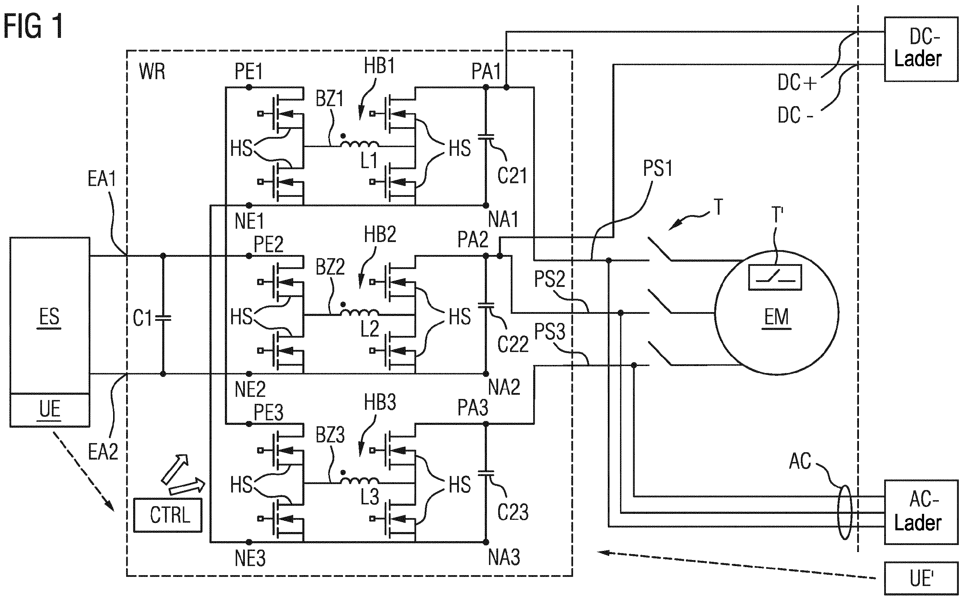

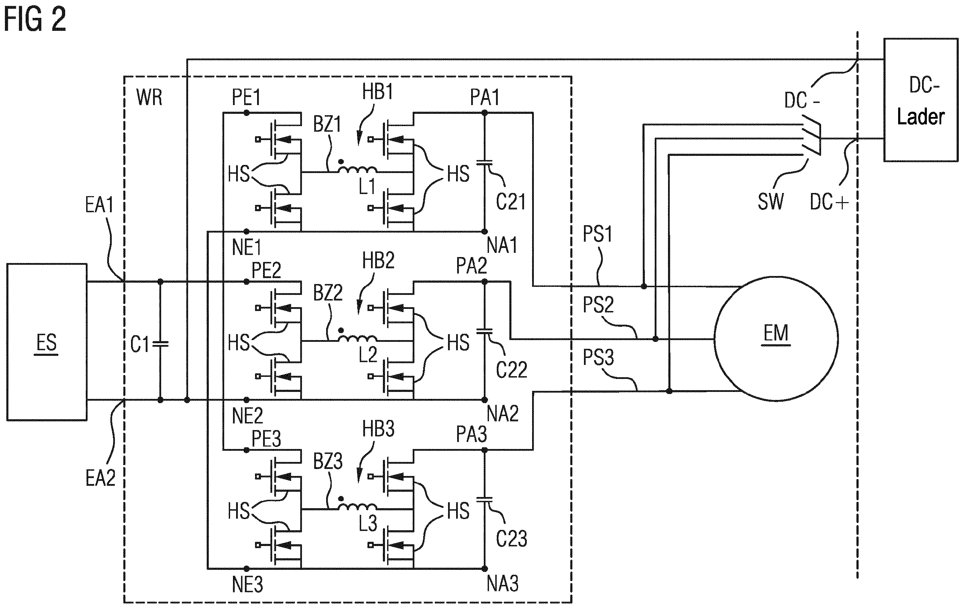

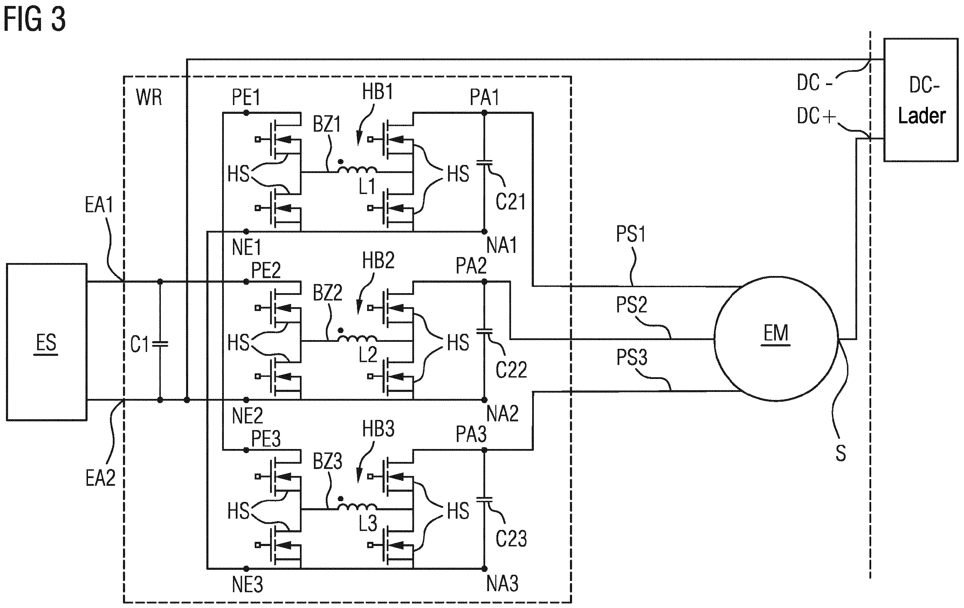

Die Figuren 1 und 2 dienen zur näheren Erläuterung des hier beschriebenen Bordnetzes und zeigen beispielhafte Fahrzeugbordnetze, während die Figur 3 eine zum Verständnis der Erfindung dienende, von Anspruch 1 abweichende Schaltung zeigt, bei der die positive Schiene nicht direkt und auch nicht über einen Schalter mit mindestens einem der Phasenstromanschlüsse verbunden ist.

Die Figuren 1, 2 und 3 zeigen jeweils ein Fahrzeugbordnetz mit einem Energiespeicher ES und einer elektrischen Maschine EM, die über einen Wechselrichter WR miteinander verbunden sind. Ein Gleichstrom-Übertragungsanschluss (in der Figur 1 mit einem "DC-Charger" außerhalb des Fahrzeugbordnetzes verbunden) weist eine positive Schiene DC+ und eine negative Schiene DC- auf.

In den Figuren 1, 2 und 3 ist der Energiespeicher ES über einen positiven Eingangsstromanschluss EA1 und einen negativen Eingangsstromanschluss EA2 des Wechselrichters WR an diesen angeschlossen. Parallel zu den Eingangsstromanschlüssen EA1, EA2 ist ein Zwischenkreiskondensator C1 angeschlossen. Der Wechselrichters WR umfasst drei H-Brücken HB1 - HB3. Die H-Brücke HB1 weist einen positiven Eingang PE1 und einen negativen Eingang NE1 auf. Die H-Brücke HB2 weist einen positiven Eingang PE2 und einen negativen Eingang NE2 auf. Die H-Brücke HB3 weist einen positiven Eingang PE3 und einen negativen Eingang NE3 auf. Die positiven Eingänge PE1-3 sind untereinander verbunden und ferner mit dem positiven Eingangsanschluss EA1 des Wechselrichters WR verbunden. Die negativen Eingänge NE1-3 sind untereinander verbunden und ferner mit dem negativen Eingangsanschluss EA2 des Wechselrichters WR verbunden. Jede H-Brücke HB1-3 weist zwei Arme auf, die jeweils zwei seriell geschaltete Halbleiterschalter HS aufweisen. Ein erster der Arme jeder H-Brücke (links dargestellt) verbindet jeweils den negativen Eingang und den positiven Eingang der jeweiligen H-Brücke HB1-3. Jede H-Brücke weist einen negativen Ausgang NA1-3 und einen positiven Ausgang NA3 auf. In jeder H-Brücke verbindet ein zweiter der Arme die Ausgänge PA1, NA1; PA2, NA2 bzw. PA3, NA3. Jeder Arm weist zwei Halbleiterschalter HS auf, die in Reihe über einen Verbindungspunkt miteinander verbunden sind. Für jede H-Brücke HB1-3 gilt, dass die Verbindungspunkte der beiden Arme mittels eines Brückenzweigs BZ1-3 miteinander verbunden sind. Der Brückenzweigs BZ1-3, welcher in jeder H-Brücke HB1-3 die Verbindungspunkte der beiden Arme verbindet, weist eine in Reihe angeschlossene Induktivität L1-3 auf. Mit anderen Worten verbindet die Induktivität L1-3 in jedem der H-Brücken HB1-3 die Verbindungspunkte der Halbleiterschalter HS der beiden Arme. Jeder Phasenanschluss ist über einen Kondensator C21-23 mit dem negativen Eingangsstromanschluss EA2 bzw. mit den negativen Eingängen NE1-3 der H-Brücken HB1-3 verbunden. Die positiven Ausgänge PA1-PA3 der H-Brücken HB1-HB3 entsprechen Phasenstromanschlüssen des Wechselrichters WR. Aus diesem Grund die positiven Ausgänge PA1-PA3 der H-Brücken HB1-3 und die Phasenstromanschlüsse PS1-3 des Wechselrichters WR als Äquivalent zueinander betrachtet werden. Mit gestrichelter Linie ist die Schnittstelle zwischen Fahrzeugbordnetz und stationären Einrichtungen (DC-Ladegerät "DC-Charger" und AC-Ladegerät "AC-Charger") dargestellt. An dieser Schnittstelle befinden sich der Gleichstrom-Übertragungsanschluss und ggf. der Wechselstrom-Übertragungsanschluss. Links der gestrichelten Linie ist das hier beschriebene Fahrzeugbordnetz dargestellt.

Nachdem Gemeinsamkeiten der Figuren 1-3 erwähnt wurden, wird in Weiteren auf hauptsächliche Unterschiede der Figuren 1-3 eingegangen: In der Schaltung der Figur 1 wird das positive Potential des Gleichstrom-Übertragungsanschlusses über einen Phasenanschluss des Wechselrichters eingespeist, und das negative Potential wird über einen anderen Phasenanschluss des Wechselrichters eingespeist. In der Schaltung der Figur 2 wird das positive Potential des Gleichstrom-Übertragungsanschlusses (direkt) über mehrere bzw. alle Phasenanschlüsse des Wechselrichters eingespeist, und das negative Potential wird über einen negativen Eingangsstromanschluss des Wechselrichters eingespeist. In der Schaltung der Figur 3 wird das positive Potential des Gleichstrom-Übertragungsanschlusses indirekt über die elektrische Maschine bzw. deren Sternpunkt in mehrere bzw. alle Phasenanschlüsse des Wechselrichters eingespeist, und das negative Potential wird über einen negativen Eingangsstromanschluss des Wechselrichters eingespeist.

In der Figur 1 ist die positive Schiene DC+ (entsprechend einem positiven Kontakt) des Gleichstrom-Übertragungsanschlusses mit dem positiven Ausgang PA1 einer ersten H-Brücke HB1 verbunden. Ferner ist die negative Schiene DC+ (entsprechend einem negativen Kontakt) des Gleichstrom-Übertragungsanschlusses mit dem positiven Ausgang PA2 einer weiteren H-Brücke HB2 verbunden. Ein Trennschalter T ist dargestellt, der mehrphasig ist und der die Phasenwicklungen der elektrischen Maschine EM (bzw. die elektrische Maschine EM selbst) von den Phasenstromanschlüssen PA1-3 des Wechselrichters trennt. Der Trennschalter T trennt somit steuerbar die elektrische Maschine EM von dem Wechselrichter WR. Alternativ kann ein Trennschalter T' innerhalb der elektrischen Maschine EM verwendet werden, der die Phasenwicklungen der elektrischen Maschine EM (etwa in Sternkonfiguration) auftrennt. Der Trennschalter T' löst somit die Sternkonfiguration der elektrischen Maschine EM auf, sofern dieser in geöffnetem Zustand ist. Zur besseren Übersicht ist der Trennschalter T' nur symbolhaft dargestellt. Wird Energie über einen der Übertragungsanschlüsse übertragen, dann ist der Trennschalter in offenem Zustand.

Ein Wechselstrom-Übertragungsanschluss AC ist Teil des Fahrzeugbordnetzes und ist dreiphasig ausgestaltet. Der Wechselstrom-Übertragungsanschluss AC ist mit den Phasenanschlüssen PS1-3 des Wechselrichters WR verbunden. Wenn Leistung vom Wechselstrom-Übertragungsanschluss AC in das Fahrzeugbordnetz eingespeist wird, dann arbeitet der Wechselrichter als Umsetzer zur Wandlung der Wechselstromleistung in Gleichspannung zum Laden des Energiespeichers ES. Der Wechselrichter übernimmt in diesem Modus und in dieser Übertragungsrichtung die Funktion eines Gleichrichters und ggf. die Funktion einer Leistungs- oder Stromsteuerung oder auch einer Spannungsregelung.

In der Figur 2 ist der negative Gleichstrom-Übertragungsanschluss DC- mit dem negativen Eingangsstromanschluss EA2 bzw. mit einer negativen Schiene des Wechselrichters WR verbunden. Der positive Gleichstrom-Übertragungsanschluss DC+ ist über einen Schalter SW (mehrphasig ausgestaltet) mit den Phasenstromanschlüssen PS1-3 des Wechselrichters WR verbunden. Ist der Schalter SW geschlossen (d.h. im Lademodus und ggf. im Rückspeisemodus), sind die Phasenstromanschlüssen PS1-3 untereinander und mit DC+ verbunden. Da die Phasenstromanschlüsse PS1-3 dann das gleicher Potential aufweisen, fließt kein Strom innerhalb der elektrischen Maschine EM. Ist der Schalter SW geöffnet (d.h. im Wechselrichtermodus und ggf. im Rekuperationsmodus) sind die Phasenstromanschlüssen PS1-3 voneinander getrennt und individuell mit den einzelnen Phasenstromanschlüssen PS1-3 verbunden. Die Phasenstromanschlüsse PS1-3 haben im Betrieb unterschiedliche Potentiale, wobei deren Differenzspannungen den Phasenspannungen entspricht, mit denen die elektrischen Maschine EM angeregt wird (bzw. die im Rekuperationsmodus von der elektrischen Maschine EM erzeugt werden).

In der Figur 3 ist der positive Gleichstrom-Übertragungsanschluss DC+ mit einer Seite der Phasenwicklungen der elektrischen Maschine EM verbunden, während die entgegengesetzten Seiten der Phasenwicklungen der elektrischen Maschine EM jeweils mit den Phasenstromanschlüssen PS1-3 verbunden sind. Die mit dem positive Gleichstrom-Übertragungsanschluss DC+ verbundenen Seite der Phasenwicklungen der elektrischen Maschine EM sind untereinander verbunden und bilden den Sternpunkt S der elektrischen Maschine EM. Der negative Gleichstrom-Übertragungsanschluss DC- ist mit dem negativen Eingangsanschluss des Wechselrichters WR verbunden. Der negative Gleichstrom-Übertragungsanschluss DC- ist insbesondere mit den negativen Eingängen der H-Brücken HB1-3 verbunden.

Die Figuren 2 und 3 sind ohne Wechselstrom-Übertragungsanschluss dargestellt. Jedoch können die dort dargestellten Fahrzeugbordnetze einen Wechselstrom-Übertragungsanschluss aufweisen, der ein- oder mehrphasig ist und mit einer oder mehreren (oder auch allen) Phasenstromanschlüssen des Wechselrichters WR verbunden ist. Zur besseren Übersicht zeigt nur die Figur 1 einer Steuereinheit CTRL des Wechselrichters. Diese steuert die Halbleiterschalter HB bzw. die Brücken HB1-3 an, wie durch die Doppelpfeile angedeutet ist. Eine übergeordnete Steuerung kann je nach Modus von einer Steuerung UE der Batterie in Form eines Batteriemanagementsystems gebildet werden, oder von einer Steuerung UE', die stationär ist. Die übergeordnete Steuerung UE bzw. UE' steuert (wie durch die gestrichelten Pfeile angedeutet) die Steuereinheit CTRL an, insbesondere durch Übermittlung eines Sollwerts. Das Fahrzeugbordnetz kann eine Empfangseinheit zur Übermittlung von Signalen von stationären Komponenten an die Steuereinheit CTRL des Fahrzeugbordnetzes aufweisen. Auch die Schaltungen der Figuren 2 und 3 können zumindest eine derartige Steuerung CTRL, UE oder UE' aufweisen.

## Patentansprüche

1. Fahrzeugbordnetz mit einem Wechselrichter (WR), einem elektrischen Energiespeicher (ES), einer elektrischen Maschine (EM) und einem Gleichstrom-Übertragungsanschluss (DC+, DC-), der als ein Plug-In-Steckanschluss oder als eine fahrzeugseitige Vorrichtung zur induktiven Energieübertragung ausgebildet ist, wobei der Wechselrichter (WR) einen positiven Eingangsstromanschluss (EA1) und einen negativen Eingangsstromanschluss (EA2) aufweist, die mit dem Energiespeicher (ES) verbunden sind;
der Wechselrichter (WR) mindestens zwei Phasenstromanschlüsse (PS1, PS2, PS3) aufweist, die mit der elektrischen Maschine (EM) verbunden sind; und
der Wechselrichter (WR) mindestens zwei H-Brücken (HB1, HB2, HB3) aufweist, wobei jede der H-Brücken (HB1, HB2, HB3) zwischen den beiden Eingangsstromanschlüssen (EA1, EA2) und jeweils einem der mindestens zwei Phasenstromanschlüsse (PS1, PS2, PS3) angeschlossen ist, jede H-Brücke (HB1, HB2, HB3) zwei Arme umfasst, jeder Arm zwei Schaltelemente (HS) umfasst, und diese zwei Schaltelemente jeweils über einen Verbindungspunkt miteinander verbunden sind, wobei die beiden Verbindungspunkte dieser zwei Arme jeder H-Brücke über eine Induktivität (L1 - L3) miteinander verbunden sind, und bei jeder H-Brücke ein erster dieser zwei Arme die beiden Eingangsstromanschlüsse (EA1, EA2) verbindet, und bei jeder H-Brücke ein zweiter dieser zwei Arme einen negativen der Eingangsstromanschlüsse (EA2) und einen der Phasenstromanschlüsse (PS1, PS2, PS3) verbindet und wobei der Gleichstrom-Übertragungsanschluss (DC+, DC-) eine positive Schiene (DC+) aufweist, die direkt oder über einen Schalter (SW) mit mindestens einem der Phasenstromanschlüsse (PS1, PS2, PS3) verbunden ist und wobei vorgesehen ist, dass während einem Ladevorgang des Energiespeichers (ES) von dem Gleichstrom-Übertragungsanschluss (DC +, DC-) über den Wechselrichter (WR) kein Strom über die elektrische Maschine (EM) fließt.

2. Fahrzeugbordnetz nach Anspruch 1, wobei der Gleichstrom-Übertragungsanschluss (DC+, DC-) eine negative Schiene (DC-) aufweist, die mit einem weiteren der Phasenstromanschlüsse (PS1, PS2, PS3) verbunden ist.

3. Fahrzeugbordnetz nach Anspruch 2, wobei die Phasenstromanschlüsse (PS1, PS2, PS3) über einen Trennschalter (T) mit der elektrischen Maschine verbunden sind.

4. Fahrzeugbordnetz nach Anspruch 1, wobei die positive Schiene (DC+) über einen Schalter (SW) mit den Phasenstromanschlüssen (PS1, PS2, PS3) verbunden ist, wobei der Gleichstrom-Übertragungsanschluss (DC+, DC-) eine negative Schiene (DC-) aufweist, die mit dem negativen Eingangsstromanschluss (EA2) des Wechselrichters (WR) verbunden ist.

5. Fahrzeugbordnetz nach einem der vorangehenden Ansprüche, wobei das Bordnetz ferner einen Wechselstrom-Übertragungsanschluss (AC) aufweist, der mit zumindest einem der Phasenstromanschlüsse (PS1, PS2, PS3) verbunden ist.

6. Fahrzeugbordnetz nach einem der vorangehenden Ansprüche, wobei die H-Brücken (HB1, HB2, HB3) des Wechselrichters (WR) jeweils die zwei Arme aufweisen, welche den positiven Eingangsstromanschluss (EA1) mit dem negativen Eingangsstromanschluss (EA2) mittels zweier serieller Halbleiterschalter (HS) verbinden.

7. Fahrzeugbordnetz nach Anspruch 6, wobei die Halbleiterschalter (HS) jedes Arms an Verbindungspunkten miteinander verbunden sind und die beiden Verbindungspunkte jeder H-Brücke mittels einer Induktivität (L1 - L3) miteinander verbunden sind.

## Claims

1. Vehicle electrical system having an inverter (WR), an electrical energy store (ES), an electrical machine (EM) and a DC transmission terminal (DC+, DC-) that is in the form of a plug-in connection or in the form of an on-vehicle device for inductive power transmission, wherein the inverter (WR) has a positive input current terminal (EA1) and a negative input current terminal (EA2) that are connected to the energy store (ES);
the inverter (WR) has at least two phase current terminals (PS1, PS2, PS3) connected to the electrical machine (EM); and
the inverter (WR) has at least two H-bridges (HB1, HB2, HB3), each of the H-bridges (HB1, HB2, HB3) being connected between the two input current terminals (EA1, EA2) and a respective one of the at least two phase current terminals (PS1, PS2, PS3), each H-bridge (HB1, HB2, HB3) comprising two arms, each arm comprising two switching elements (HS), and these two switching elements each being connected to one another via a connecting point, wherein the two connecting points of these two arms of each H-bridge are connected to one another via an inductance (L1 - L3), and a first of these two arms in each H-bridge connects the two input current terminals (EA1, EA2), and a second of these two arms in each H-bridge connects a negative instance of the input current terminals (EA2) and one of the phase current terminals (PS1, PS2, PS3), and wherein the DC transmission terminal (DC+, DC-) has a positive rail (DC+) connected to at least one of the phase current terminals (PS1, PS2, PS3) directly or via a switch (SW), and wherein there is provision for no current to flow via the electrical machine (EM) from the DC transmission terminal (DC+, DC-) via the inverter (WR) during a charging process for the energy store (ES).

2. Vehicle electrical system according to Claim 1, wherein the DC transmission terminal (DC+, DC-) has a negative rail (DC-) connected to another of the phase current terminals (PS1, PS2, PS3).

3. Vehicle electrical system according to Claim 2, wherein the phase current terminals (PS1, PS2, PS3) are connected to the electrical machine via an isolator switch (T).

4. Vehicle electrical system according to Claim 1, wherein the positive rail (DC+) is connected to the phase current terminals (PS1, PS2, PS3) via a switch (SW), the DC transmission terminal (DC+, DC- ) having a negative rail (DC-) connected to the negative input current terminal (EA2) of the inverter (WR).

5. Vehicle electrical system according to one of the preceding claims, wherein the on-board electrical system further has an AC transmission terminal (AC) connected to at least one of the phase current terminals (PS1, PS2, PS3).

6. Vehicle electrical system according to one of the preceding claims, wherein the H-bridges (HB1, HB2, HB3) of the inverter (WR) each have the two arms connecting the positive input current terminal (EA1) to the negative input current terminal (EA2) by means of two series semiconductor switches (HS).

7. Vehicle electrical system according to Claim 6, wherein the semiconductor switches (HS) of each arm are connected to one another at connecting points and the two connecting points of each H-bridge are connected to one another by means of an inductance (L1 - L3).

## Revendications

1. Réseau de bord de véhicule, comprenant un onduleur (WR), un accumulateur d'énergie électrique (ES), une machine électrique (EM) et une borne de transmission de courant continu (DC+, DC-) qui est réalisée sous la forme d'un connecteur de raccordement enfichable ou d'un dispositif côté véhicule pour la transmission d'énergie inductive, l'onduleur (WR) présentant une borne de courant d'entrée positive (EA1) et une borne de courant d'entrée négative (EA2) qui sont reliées à l'accumulateur d'énergie (ES) ;
l'onduleur (WR) présentant au moins deux bornes de courant de phase (PS1, PS2, PS3) qui sont reliées à la machine électrique (EM) ; et
l'onduleur (WR) présentant au moins deux ponts en H (HB1, HB2, HB3), chacun des ponts en H (HB1, HB2, HB3) étant connecté entre les deux bornes de courant d'entrée (EA1, EA2) et respectivement l'une des au moins deux bornes de courant de phase (PS1, PS2, PS3), chaque pont en H (HB1, HB2, HB3) présentant deux branches, chaque branche comprenant deux éléments de commutation (HS), et ces deux éléments de commutation étant respectivement reliés ensemble par un point de liaison, les deux points de liaison de ces deux branches de chaque pont en H étant reliés ensemble par une inductance (L1 à L3), et pour chaque pont en H, une première de ces deux branches reliant les deux bornes de courant d'entrée (EA1, EA2), et pour chaque pont en H, une deuxième de ces deux branches reliant une borne négative des bornes de courant d'entrée (EA2) et l'une des bornes de courant de phase (PS1, PS2, PS3), et la borne de transmission de courant continu (DC+, DC-) présentant un rail positif (DC+) qui est relié directement ou par un commutateur (SW) à au moins l'une des bornes de courant de phase (PS1, PS2, PS3), et dans lequel il est prévu que pendant un processus de charge de l'accumulateur d'énergie (ES) de la borne de transmission de courant continu (DC+, DC-) par l'onduleur (WR) aucun courant ne passe par la machine électrique (EM).

2. Réseau de bord de véhicule selon la revendication 1, dans lequel la borne de transmission de courant continu (DC+, DC-) présente un rail négatif (DC-) qui est relié à une autre des bornes de courant de phase (PS1, PS2, PS3).

3. Réseau de bord de véhicule selon la revendication 2, dans lequel les bornes de courant de phase (PS1, PS2, PS3) sont reliées à la machine électrique par un disjoncteur (T).

4. Réseau de bord de véhicule selon la revendication 1, dans lequel le rail positif (DC+) est relié par un commutateur (SW) aux bornes de courant de phase (PS1, PS2, PS3), la borne de transmission de courant continu (DC+, DC-) présentant un rail négatif (DC-) qui est relié à la borne de courant d'entrée négative (EA2) de l'onduleur (WR).

5. Réseau de bord de véhicule selon l'une quelconque des revendications précédentes, dans lequel le réseau de bord présente en outre une borne de transmission de courant alternatif (AC) qui est reliée à au moins l'une des bornes de courant de phase (PS1, PS2, PS3).

6. Réseau de bord de véhicule selon l'une quelconque des revendications précédentes, dans lequel les ponts en H (HB1, HB2, HB3) de l'onduleur (WR) présentent respectivement les deux branches qui relient la borne de courant d'entrée positive (EA1) à la borne de courant d'entrée négative (EA2) au moyen de deux commutateurs à semi-conducteur série (HS).

7. Réseau de bord de véhicule selon la revendication 6, dans lequel les commutateurs à semi-conducteur (HS) de chaque bras sont reliés ensemble en des points de liaison, et les deux points de liaison de chaque pont en H sont reliés ensemble au moyen d'une inductance (L1 à L3).
